# EUROPEAN PATENT APPLICATION

(11) **EP 4 357 178 A1**
(43) Date of publication of application: **24.04.2024**
(21) Application number: 23179068.4
(22) Date of filing: 13.06.2023
(51) Int. Cl.: B60J 10/82, B60J 10/24, B60J 10/30

(54) **VEHICLE SUNROOF DEVICE AND WINDOW PLATE ASSEMBLY THEREOF**

(30) Priority: 11.10.2022 US 202263415065 P
(71) Applicant: Fuzhou Mingfang Automobile Parts Industry Co., Ltd., Fuzhou (CN); Hsin Chong Machinery Works Co., Ltd., Taoyuan City 335 (TW)
(72) Inventor: CHIU, Tzu-Heng, 335 Taoyuan City (TW); LAN, Yi-Jen, 335 Taoyuan City (TW); DAYOUB, Karim, 335 Taoyuan City (TW); PELINO, Chris., 335 Taoyuan City (TW)
(74) Representative: 2K Patentanwälte Blasberg Kewitz & Reichel

(57) **Abstract**

A window plate assembly includes: a glass panel (10); a window frame (20) disposed at a periphery of the glass panel (10), an outer periphery of the window frame (20) is disposed with a buckling groove (22) and extended with a block flange (23), a planar surface (24) is formed between the buckling groove (22) and the block flange (23); and a seal (30) having an abutting part (31) and a buckling part (32) extended from the abutting part (31), the buckling part (32) is buckled in the buckling groove (22) to make the abutting part (31) abut against the planar surface (24) and the block flange (23), and a buckling direction of the buckling part (32) and the buckling groove (22) is perpendicular to the planar surface (24).

## Description

### BACKGROUND OF THE DISCLOSURE

### Technical Field

The present disclosure relates to a vehicle field, especially to a window plate assembly of a vehicle.

### Description of Related Art

An adhesive strip is often disposed between the vehicle body and a glass frame for a vehicle window of a vehicle body, thus a sealing effect can be achieved through the adhesive strip abutting against the vehicle body or the glass frame to generate an elastic deformation. As such, rainwater or moisture can be prevented from permeating into the vehicle body. An adhering method is used to make the adhesive strip be fastened with a glass frame or the vehicle body to ensure a sealing status, or a buckling method is used to make the adhesive strip be easily detached.

The adhering method allows the adhesive strip to be tightly adhered with the glass frame or the vehicle body to achieve a good sealing effect, but the assembling procedure is complicated (such as requiring steps of cleaning the location to be adhered, preparing an adhesive agent, adhering the adhesive strip, and placing to be dried), and the deteriorated adhesive strip is not easy to be replaced, and a risk of the adhesive strip being loosened is caused. The buckling method allows the adhesive strip to be easily detached relative to the vehicle body or the glass frame, but the adhesive strip may not be ensured to tightly adhere with the vehicle body or the glass frame, thus a problem of poor sealing is concerned.

Accordingly, the applicant of the present disclosure has devoted himself for improving the mentioned shortages.

### SUMMARY OF THE DISCLOSURE

The present disclosure is to provide a vehicle sunroof device and a window plate assembly thereof, in which a seal is easy to be detached and forms an excellent sealing effect with a window frame.

Accordingly, the present disclosure provides a window plate assembly, which includes a glass panel, a window frame, and a seal. The window frame is disposed at a periphery of the glass panel. An outer periphery of the window frame is disposed with a buckling groove and extended with a block flange. A planar surface is formed between the buckling groove and the block flange. An abutting part is formed at one side of the seal, and a buckling part is extended from the abutting part. The buckling part is buckled in the buckling groove to make the abutting part abut against the planar surface and the block flange. A buckling direction of the buckling part and the buckling groove is perpendicular to the planar surface.

According to one embodiment of the present disclosure, the buckling part includes a main body and a latching hook. A reserved hook is formed in the buckling groove. When the main body is inserted in the buckling groove, the latching hook is correspondingly latched with the reversed hook.

According to one embodiment of the present disclosure, a cross section of the seal is in a semi-circular shape.

According to one embodiment of the present disclosure, the window frame has an installing slot, the glass panel is disposed in the installing slot, and the block flange is extended in a direction away from the glass panel.

According to one embodiment of the present disclosure, an included angle is defined between the block flange and the planar surface, and the included angle is smaller than or equal to 90°.

According to one embodiment of the present disclosure, a guiding inclined surface is formed at an opening of the buckling groove.

According to one embodiment of the present disclosure, the seal and the buckling part are a hollow structure.

Accordingly, the present disclosure provides a vehicle sunroof device, which includes a vehicle body and a window plate assembly. The vehicle body has a sunroof seat. The window plate assembly is disposed in the sunroof seat and has a glass panel, a window frame, and a seal. The glass panel is disposed on the window frame. An outer periphery of the window frame is disposed with a buckling groove and extended with a block flange. A planar surface is formed between the buckling groove and the block flange. The seal has an abutting part and a buckling part extended from the abutting part. The buckling part is buckled in the buckling groove to make the abutting part abut against the planar surface and the block flange. A buckling direction of the buckling part and the buckling groove is perpendicular to the planar surface. When the window plate assembly tightly is configured to close the sunroof seat, the seal tightly abuts against an inner edge of the sunroof seat relative to one side of the abutting part.

Advantages achieved by the present disclosure are as follows. Through the buckling part of the seal being buckled in the buckling groove of the window frame, the window plate assembly of the present disclosure makes the seal be easily and rapidly detached, and through the block flange and the planar surface abutting against the abutting part of the seal, a sealing status is formed to effectively increase the watertightness.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 is a perspective exploded view showing the vehicle sunroof device according to the present disclosure;
FIG. 2 is a perspective exploded view showing the window plate assembly according to the present disclosure;
FIG. 3 is a partially enlarged view of FIG. 2; and
FIG. 4 is a cross-sectional view showing an operating status of the vehicle sunroof device according to the present disclosure.

### DETAILED DESCRIPTION OF THE DISCLOSURE

The technical contents of this disclosure will become apparent with the detailed description of embodiments accompanied with the illustration of related drawings as follows. It is intended that the embodiments and drawings disclosed herein are to be considered illustrative rather than restrictive.

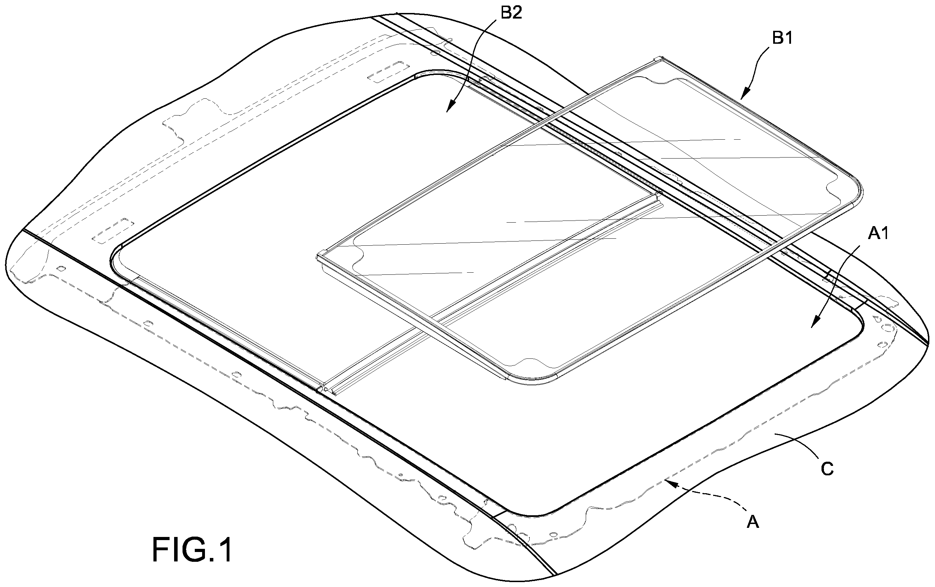

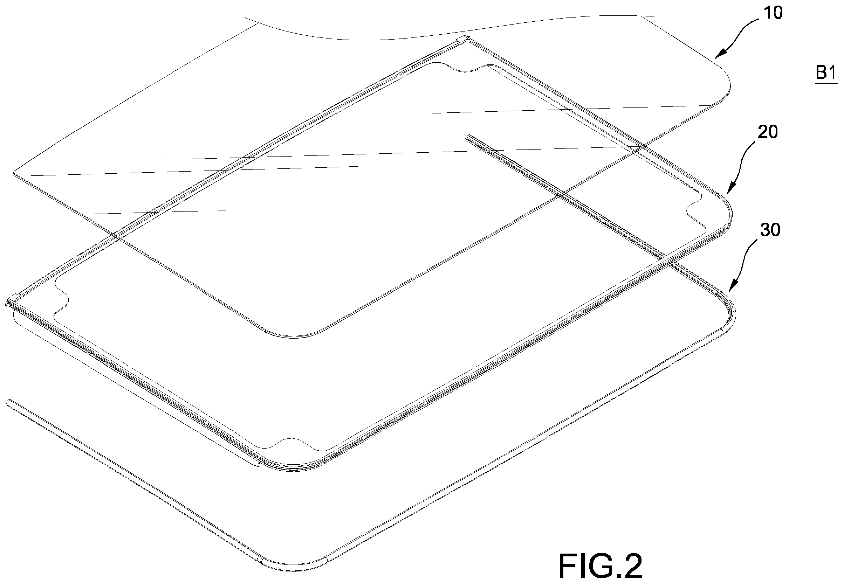

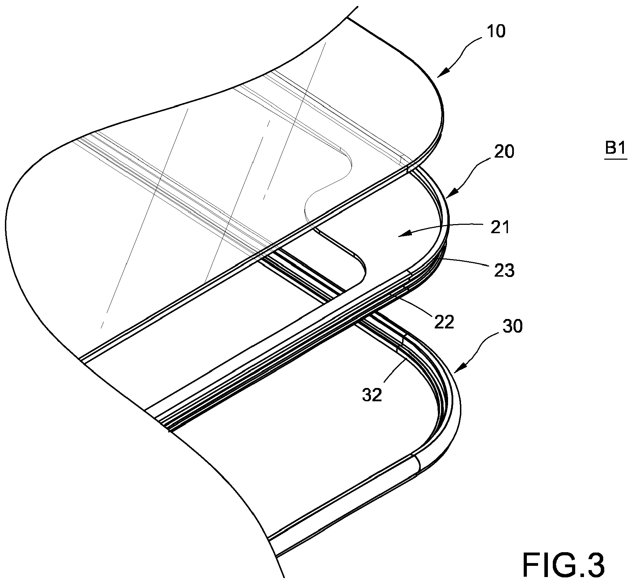

Please refer from FIG. 1 to FIG. 4, the present disclosure provides a vehicle sunroof device and a window plate assembly thereof. The vehicle sunroof device includes a vehicle body and a window plate assembly. The vehicle body has a sunroof seat (that is, an opening or a window opening) A1 allowing the window plate assembly to be disposed. In some embodiments, the vehicle body includes a reinforced frame A and a sheet metal C. A top end and lateral sides of the reinforced frame A are covered by the sheet metal C to increase the structural strength via the reinforced frame A. The sunroof seat A1 is formed on the reinforced frame A and the sheet metal C allows the window plate assembly of the present disclosure to be disposed, here is not intended to be limiting. For example, the vehicle body may only include the sheet plate C. In some embodiments, the window plate assembly is a moveable sunroof B1 to make at least a part of the sunroof seat A1 be opened or closed, here is not intended to be limiting. For example, the window plate assembly may be a fixed window B2 to fix and close the whole or at least a part of the sunroof seat A1. In some embodiments, the following illustrations is provided for the movable sunroof B1. In some embodiments, the window plate assembly includes a glass panel 10, a window frame 20 and a seal 30.

In some embodiments, the glass panel 10 is formed in a rectangular shape. Four corners of the glass panel 10 respectively have a round corner to prevent a situations of stress concentration from occurring, and a glass breaking situation may be avoided, here is not intended to be limiting. The designer may adjust the appearance of the glass panel 10 according to actual needs.

The window frame 20 is corresponding to the appearance of the glass panel 10 and surrounds an outer periphery of the glass panel 10. An installing slot 21 is defined at a top end of the window frame 20. The glass panel 10 is disposed in the installing slot 21. The glass panel 10 is fastened in the installing slot 21 of the window frame 20 with an adhering, a pressing or a buckling method, here is not intended to be limiting as long as the glass panel 10 is fastened in the installing slot 21. A buckling groove 22 is defined at an outer periphery of the window frame 20, and a block flange 23 is extended from the outer periphery of the window frame 20. A planar surface 24 is formed between the buckling groove 22 and the block flange 23. The block flange 23 is located at the top end of the window frame 20 and extended in a direction away from the glass panel 10. The buckling groove 22 is located at a bottom end of the window frame 20. In some embodiments, the window frame 20 and block flange 23 are formed through an injecting forming means utilizing polyurethane to be integrated as one piece (or integrally formed), here is not intended to be limiting. The window frame 20 and the block flange 23 can also be formed through an injection forming means utilizing other materials, for example a plastic material, to be integrated as one piece.

In some embodiments, the seal 30 is made of a rubber material, here is not intended to be limiting. The seal 30 is disposed on the outer periphery of the window frame 20, thus a sealing status is formed between the seal 30 and the window frame 20. An abutting part 31 is formed at one side of the seal 30, and a buckling part 32 is extended from the abutting part 31. The buckling part 32 is buckled in the buckling groove 22 of the window frame 20 to make the abutting part 31 tightly abut against the planar surface 24 and the block flange 23 of the window frame 20, thus the seal 30 is fastened on the window frame 20, and a sealing status is formed between the seal 30 and the window frame 20. An included angle θ is defined between the block flange 23 and the planar surface 24. The included angle θ is smaller than or equal to 90°, thus the block flange 23 tightly abuts against at least one portion of the abutting part 31, and the block flange 23 partially covers a top end of the seal 30. As such, the seal 30 is easy to be detached relative to the window frame 20, and the sealing effect between the seal 30 and the window frame 20 may be ensured. In some embodiments, a guiding inclined surface 25 is respectively formed at a top opening and a bottom opening of the buckling groove 22, thus the buckling part 32 is inserted in the buckling groove 22 along the guiding inclined surface 25, here is not intended to be limiting.

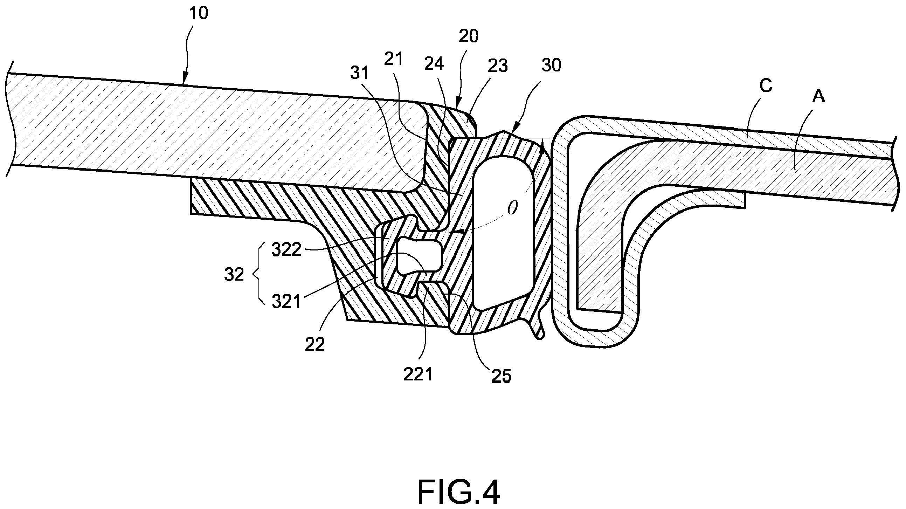

Details are provided as follows. The buckling part 32 includes a main body 321 and a latching hook 322. A reserved hook 221 is formed in the buckling groove 22. When the main body 321 is inserted in the buckling groove 22, the latching hook 322 is correspondingly latched with the reversed hook 221. In some embodiments, there are two latching hooks 322 and two reversed hooks 221. The latching hook 322 is respectively located at a top end and a bottom end of the main body 321. The reversed 221 is respectively located at a top end and a bottom end of the buckling groove 22, here is not intended to be limiting. There is one latching hook 322 and one reversed hook 221 as long as the buckling and fastening effect is achieved. In some embodiments, the buckling part 32 is a hollow structure as shown in FIG. 4, thus the weight of the seal 30 is reduced, and the elastic deformation of the buckling part 32 is increased, here is not intended to be limiting. As such, if there is a manufacturing tolerance between the buckling part 32 and the buckling groove 22, the buckling part 32 is elastically deformed to be buckled in the buckling groove 22, thus the buckling match of the buckling part 32 and the buckling groove 22 is increased, and the requirement of the processing dimension is more flexible and the production cost is lowered.

A buckling direction of the buckling part 32 and the buckling groove 22 is perpendicular to the planar plane 24, thus the abutting part 31 tightly abuts towards the planar plane 24 to form the sealing status when the buckling part 32 is buckled in the buckling groove 22 of the window frame 20. In some embodiments, a distance defined from a latching surface (not labelled in figures) of the latching hook 322 to the abutting part 31 is slightly shorter than a distance defined from a latching surface (not labelled in figures) of the reversed hook 221 to the planar surface 24, thus the abutting part 31 is ensured to tightly abut against the planar surface 24 to form the sealing status after the seal 30 is latched on the window frame 20.

Please refer to FIG. 4, a cross section of the seal 30 is in a semi-circular shape, and the seal 30 is a hollow structure, here is not intended to be limiting. As such, when the window plate assembly closes (or, is engaged with) the sunroof seat A1 defined on the sheet metal C of the vehicle body, the abutting part 31 tightly abuts against the planar surface 24 to form the sealing status, the arched side (in other words, the side of the seal 30 opposite to the abutting part 31) tightly abuts against an inner edge of the sunroof seat A1 of the sheet metal C of the vehicle body to form the sealing status. Because the seal 30 is the hollow structure, the weight of the seal 30 is reduced, and the elastic deformation is easily generated due to an internal hollow space in the seal 30, thus the seal 30 is tightly adhered with the planar surface 24 and the inner edge of the sunroof seat A1 of the sheet metal C to achieve the desirable sealing effect.

## Claims

1. A window plate assembly, comprising:
a glass panel (10);
a window frame (20), disposed at a periphery of the glass panel (10), wherein the window frame (20) comprises a buckling groove (22) defined on an outer periphery thereof and a block flange (23) extended from the outer periphery, and a planar surface (24) is disposed between the buckling groove (22) and the block flange (23); and
a seal (30), comprising an abutting part (31) disposed on one side thereof and a buckling part (32) extended from the abutting part (31), wherein the buckling part (32) is buckled in the buckling groove (22) to make the abutting part (31) abut against the planar surface (24) and the block flange (23), and a buckling direction of the buckling part (32) and the buckling groove (22) is perpendicular to the planar surface (24).

2. The window plate assembly according to claim 1, wherein the buckling part (32) comprises a main body (321) and a latching hook (322), a reserved hook (221) is disposed in the buckling groove (22), and when the main body (321) is inserted in the buckling groove (22), the latching hook (322) is correspondingly latched with the reversed hook (221).

3. The window plate assembly according to claim 1, wherein a cross section of the seal (30) is in a semi-circular shape.

4. The window plate assembly according to claim 1, wherein the window frame (20) comprises an installing slot (21), the glass panel (10) is disposed in the installing slot (21), and the block flange (23) is extended in a direction away from the glass panel (10).

5. The window plate assembly according to claim 1, wherein an included angle is defined between the block flange (23) and the planar surface (24), and the included angle is smaller than 90°.

6. The window plate assembly according to claim 1, wherein an included angle is defined between the block flange (23) and the planar surface (24), and the included angle is equal to 90°.

7. The window plate assembly according to claim 1, wherein a guiding inclined surface (25) is disposed at an opening portion of the buckling groove (22).

8. The window plate assembly according to claim 1, wherein the seal (30) is a hollow structure.

9. The window plate assembly according to claim 1, wherein the buckling part (32) is a hollow structure.

10. A vehicle sunroof device, comprising:
a vehicle body, comprising a sunroof seat (A1); and
a window plate assembly according to any claim from 1 to 9, disposed in the sunroof seat (A1), and when the window plate assembly is configured to close the sunroof seat (A1), the seal (30) abuts against an inner edge of the sunroof seat relative to one side of the abutting part (31).
